# EUROPÄISCHE PATENTSCHRIFT

(11) **EP 3 212 483 B1**
(45) Veröffentlichungstag und Bekanntmachung des Hinweises auf die Patenterteilung: **01.07.2020**
(21) Anmeldenummer: 15778984.3
(22) Anmeldetag: 14.10.2015
(51) Int. Cl.: B61D 19/02

(54) **EINRICHTUNG ZUR VERTIKALEN EINSTELLUNG EINER SCHIENENFAHRZEUGTÜR**
DEVICE FOR VERTICALLY ADJUSTING A RAIL VEHICLE DOOR
DISPOSITIF DE RÉGLAGE VERTICAL D'UNE PORTE DE VÉHICULE FERROVIAIRE

(30) Priorität: 27.10.2014 AT 507692014
(43) Veröffentlichungstag der Anmeldung: 06.09.2017
(73) Patentinhaber: Siemens Mobility Austria GmbH, 1210 Wien (AT)
(72) Erfinder: ALEXY, Rastislav, 059 01 Spisska Bela (SK)
(74) Vertreter: Deffner, Rolf
(86) Internationale Anmeldenummer: PCT/EP2015/073753
(87) Internationale Veröffentlichungsnummer: WO 2016/066425

(56) Entgegenhaltungen:
- EP-A2- 1 293 408
- WO-A1-2014/032068
- DE-A1- 4 344 075
- DE-C1- 3 304 569

## Beschreibung

### Technisches Gebiet

Die Erfindung betrifft eine Einrichtung zur vertikalen Einstellung einer Schienenfahrzeugtür.

### Stand der Technik

Passagierraumtüren von Schienenfahrzeugen, insbesondere von Nahverkehrsmitteln wie U-Bahnen, sind meist als 2flügelige Schiebe- oder Schwenkschiebetüren ausgeführt. Dabei kommen Türsysteme zur Anwendung, welche neben der Türblättern, einer Gleitführung, einem Kraftantrieb mit entsprechender elektrischer oder pneumatischer Ausrüstung auch Signalverbindungen zu einer Fahrzeugelektronik umfassen. Ein solches Türsystem wird in den meisten Fällen als eigenes, vorgefertigtes und getestetes System an einem Wagenkasten montiert. Die in der Fertigung unvermeidlichen Toleranzen bedingen eine Einrichtung zur Kompensation dieser Toleranzen, sodass ein Türsystem in seiner relativen Lage zum Wagenkasten in bestimmten Grenzen variierbar zu montieren ist. Dazu werden beispielsweise unterschiedlich dicke Abstandsbleche an den Befestigungspunkten untergelegt um die vertikale Lage des gesamten Türsystems gegenüber dem Wagenkasten einstellen zu können. Dies ist insbesondere bei Türsystemen üblich, bei welchen keine vertikale Einstellmöglichkeit einzelner Türblätter vorgesehen ist. Diese Türsysteme sind nur sehr kompliziert vertikal einstellbar, da bei diesen da komplette Türsystem demontiert und mit geänderten Abstandsblechen wieder montiert werden muß. Dieser Vorgang ist meist mehrfach zu wiederholen bis die optimale Vertikalposition gefunden ist.

Das Dokument DE 33 04 569 C1 beschreibt eine Einrichtung zur vertikalen Einstellung einer Schienenfahrzeugtür, umfassend eine erste Zahnplatte, und eine zweite Zahnplatte, wobei die erste Zahnplatte zur lösbaren Befestigung an einem Türblatt ausgebildet ist und die zweite Zahnplatte zur lösbaren Befestigung an einem Türantrieb ausgebildet ist und die Zahnplatten jeweils an einer Oberfläche mit einer Zahnstruktur ausgestattet sind, welche ein Einrasten der Zahnplatten zueinander in Inkrementen des Zahnabstandes der Zahnstruktur ermöglichen.

### Darstellung der Erfindung

Der Erfindung liegt daher die Aufgabe zugrunde, eine Einrichtung zur vertikalen Einstellung einer Schienenfahrzeugtür anzugeben, welche auch bei Türsystemen ohne vertikale Türblatteinstellung anwendbar ist.

Die Aufgabe wird durch eine Einrichtung zur vertikalen Einstellung einer Schienenfahrzeugtür nach Anspruch 1 und einen Umbausatz für ein Türsystem nach Anspruch 3 gelöst.

Vorteilhafte Ausgestaltungen sind Gegenstand untergeordneter Ansprüche.

Dem Grundgedanken der Erfindung nach wird eine Einrichtung zur vertikalen Einstellung einer Schienenfahrzeugtür aufgebaut, welche eine erste Zahnplatte und eine zweite Zahnplatte umfasst, wobei die erste Zahnplatte zur lösbaren Befestigung an einem Türblatt ausgebildet ist und die zweite Zahnplatte zur lösbaren Befestigung an einem Türantrieb ausgebildet ist und die Zahnplatten jeweils an einer Oberfläche mit einer Zahnstruktur ausgestattet sind, welche ein Einrasten der Zahnplatten zueinander in Inkrementen des Zahnabstandes der Zahnstruktur ermöglichen, wobei zur lösbaren Befestigung der Zahnplatten mit dem Türantrieb und dem Türblatt jeweils eine Schraubverbindung vorgesehen ist und wobei die Zahnstruktur in Einbaulage waagrecht ausgerichtet ist.

Dadurch ist der Vorteil erzielbar, eine Einstellung des Türblatts in feinen Stufen, entsprechend dem Zahnabstand der Zahnstruktur vornehmen zu können, ohne dass dazu der Türantrieb in seiner Position verändert werden muß.

Dazu ist erfindungsgemäß jede der Zahnplatten an einer Oberfläche mit einer Zahnstruktur ausgestattet, welche in Einbaulage der Zahnplatten waagrecht angeordnet ist. Dadurch ist eine vertikale Einstellung des Türblatts ermöglicht. Die Zahnstruktur ist vorteilhafterweise mit einem in Wesentlichen dreieckförmigen Querschnitt ausgestattet, da solcherart ein sicheres Einrasten ineinander gesichert ist.

Der Zahnabstand (Zahnteilung) der Zahnstruktur ist typischerweise 1mm, da wesentlich größere Zahnabstände nur zu einer ungenauen Einstellmöglichkeit führen und kleinere Zahnabstände meist nicht erforderlich sind.

Die Befestigung der Zahnplatten erfolgt jeweils mittels einer Schraubverbindung. Dabei ist eine in einem bestimmten Bereich stufenlos verstellbare Schraubverbindung vorzusehen, sodass die Zahnplatten in der möglichen Einrastung zueinander auch mittels einer Schraubverbindung fixierbar sind. Dazu sind insbesondere Langlöcher und in Nuten verschiebbare Gewindemuttern vorzusehen.

Es ist besonders empfehlenswert, die Einrichtung zur vertikalen Einstellung einer Schienenfahrzeugtür als Umbausatz auszuführen. Solcherart können auch Schienenfahrzeugtüren ohne Vertikalverstellung mit einer Vertikalverstellung ausgerüstet, insbesondere auch nachgerüstet werden. Dabei kann ein Türantrieb an seinen Befestigungspunkten in das Wageninnere versetzt angeordnet werden, sodass die der durch die Zahnplatten vergrößerte Abstand des Türblatts kompensiert ist. In praktischen Anwendungsfällen ist eine ausreichende Beabstandung eines Türantriebs von den Innenausbauteilen (Deckenverkleidungen) gegeben. Die Dicke der Zahnplatten beträgt typischerweise 8 bis 10mm, was zu einer erforderlichen Versetzung des Türantriebs von maximal 20mm führt.

Ein erfindungsgemäßer Umbausatz umfasst je Türblatt eine erste und eine zweite Zahnplatte gemäß der beschriebenen Ausführung.

In weiterer Fortbildung der Erfindung kann der Umbausatz mit Befestigungsmitteln, insbesondere Schrauben und Gleitmuttern ausgestattet werden.

### Kurzbeschreibung der Zeichnungen

Es zeigen beispielhaft:
**Fig.1** Prinzip einer Einrichtung zur vertikalen Einstellung einer Schienenfahrzeugtür.
**Fig.2** Einrichtung zur vertikalen Einstellung einer Schienenfahrzeugtür - Explosionsdarstellung.
**Fig.3** Einrichtung zur vertikalen Einstellung einer Schienenfahrzeugtür.
**Fig.4** Einrichtung zur vertikalen Einstellung einer Schienenfahrzeugtür - Verstellung nach unten.
**Fig.5** Einrichtung zur vertikalen Einstellung einer Schienenfahrzeugtür - Verstellung nach oben.

### Ausführung der Erfindung

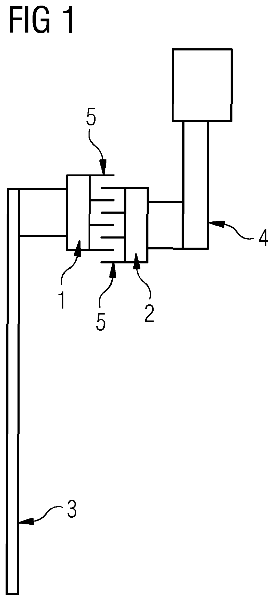

**Fig.1** zeigt beispielhaft und schematisch das Prinzip einer Einrichtung zur vertikalen Einstellung einer Schienenfahrzeugtür. Es ist die prinzipielle Wirkungsweise einer Vertikaleinstellung in stark abstrahierter Form dargestellt. In einer senkrechten Schnittdarstellung durch ein Türblatt 3, einen Türantrieb 4 und die zur Vertikaleinstellung erforderlichen Zahnplatten 1, 2 ist die Wirkungsweise offenbart. Dabei ist eine erste Zahnplatte 1 mit dem Türblatt 3 verbunden und eine zweite Zahnplatte 2 mit einem Türantrieb 4 verbunden. Beide Zahnplatten 1, 2 weisen eine Zahnstruktur 5 auf, welche in Einbaulage der Zahnplatten 1, 2 waagrecht ausgerichtet sind. Die Zahnstrukturen 5 der Zahnplatten 1, 2 sind für den gegenseitigen formschlüssigen Eingriff ausgebildet und können in den durch den Zahnabstand vorgegebenen Inkrementen ineinander eingreifen. Dadurch ist eine Vertikalverstellung des Türblatts 3 in Bezug auf den Türantrieb 4 in einem bestimmten Längenbereich möglich. Zur Vereinfachung der Darstellung sind in Fig.1 die erforderlichen Befestigungsmittel nicht gezeigt.

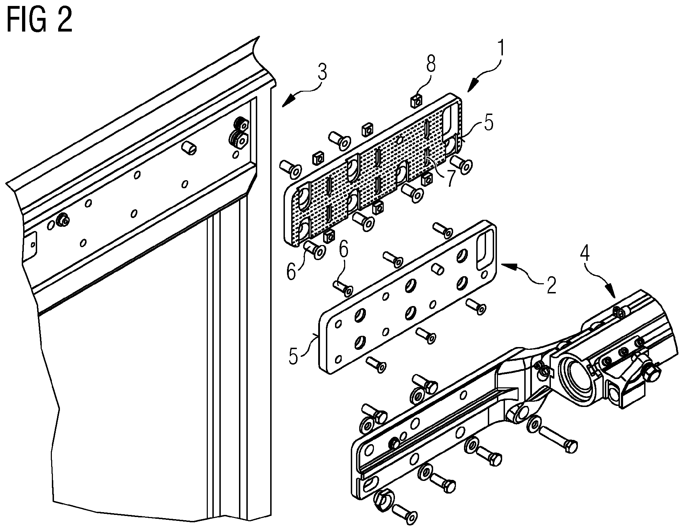

**Fig.2** zeigt beispielhaft und schematisch eine Einrichtung zur vertikalen Einstellung einer Schienenfahrzeugtür in einer Explosionsdarstellung. Es sind die Bauteile einer Vertikaleinstellung jeweils getrennt voneinander, jedoch in funktional richtiger Einbaulage dargestellt. Die Zahnplatten 1, 2 weisen jeweils eine Zahnstruktur 5 auf, welche zueinander liegend ausgerichtet ist. Zur Verbindung der Zahnplatten 1, 2 mit dem Türblatt 3 bzw. dem Türantrieb 4 sind jeweils Schraubverbindungen 6 vorgesehen. Um die Zahnplatten 1, 2 in jeder möglichen Verstellposition miteinander und damit auch das Türblatt 3 mit dem Türantrieb 4 zu verbinden ist eine Verstellschraubverbindung vorgesehen, welche neben einer Schraube auch ein Langloch 7 in der ersten Zahnplatte 1 und eine in einer Führung 9 schiebbaren Gleitmutter 8 umfasst.

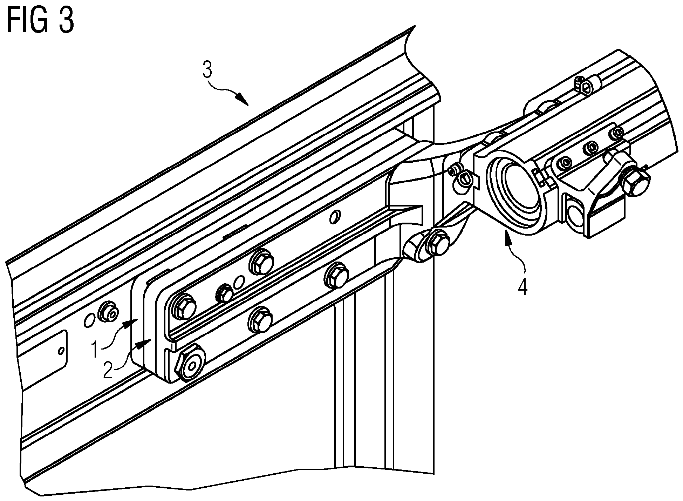

**Fig.3** zeigt beispielhaft und schematisch eine Einrichtung zur vertikalen Einstellung einer Schienenfahrzeugtür. Es ist die Verstelleinrichtung aus Fig.2 in zusammengebauter Lage dargestellt.

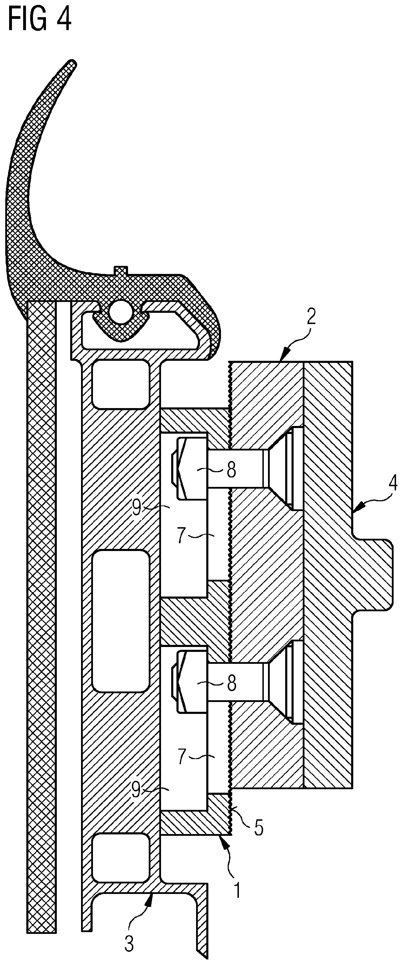

**Fig.4** zeigt beispielhaft und schematisch eine Einrichtung zur vertikalen Einstellung einer Schienenfahrzeugtür bei einer Verstellung nach unten. Es ist eine vertikale Schnittdarstellung durch die Befestigungsstelle eines Türblatts 3 mit einem Türantrieb 4 dargestellt, wobei eine erste Zahnplatte 1 mit dem Türblatt 3 verbunden ist und eine zweiter Zahnplatte 2 mit dem Türantrieb 4 verbunden ist. Die Zahnplatten 1, 2 sind jeweils mit einer Zahnstruktur 5 ausgestattet, welche zueinander in Eingriff befindlich sind. Die Zahnplatten 1, 2 sind mittels einer Schraubverbindung lösbar verbunden. Dabei ist die erste Zahnplatte 1 mit einem Langloch 7 ausgestattet, durch welches eine Schraube in einem bestimmten Längenbereich stufenlos positionierbar ist. Diese Schraube greift in eine Gleitmutter 8 ein, welche in einer Führung 9 schiebbar gelagert ist. Gezeigtes Ausführungsbeispiel zeigt zwei der beschriebenen Verschraubungen, die gesamte Verbindung der Zahnplatten 1, 2 untereinander erfolgt typischerweise mit einer höheren Anzahl. Fig.2 zeigt dazu sechs der beschriebenen Verschraubungen.
Das Türblatt 3 ist gegen den Türantrieb 4 in der maximalen Verstellung nach unten dargestellt.

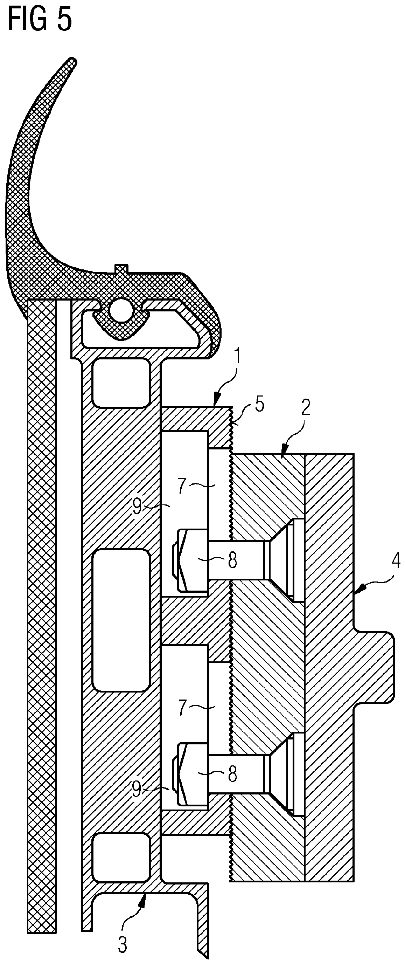

**Fig.5** zeigt beispielhaft und schematisch eine Einrichtung zur vertikalen Einstellung einer Schienenfahrzeugtür bei einer Verstellung nach oben. Es ist die Befestigungsstelle eines Türblatts 3 mit einem Türantrieb 4 aus Fig.4 dargestellt. Das Türblatt 3 ist gegen den Türantrieb 4 in der maximalen Verstellung nach oben dargestellt.

### Liste der Bezeichnungen

- 1: Erste Zahnplatte
- 2: Zweite Zahnplatte
- 3: Türblatt
- 4: Türantrieb
- 5: Zahnstruktur
- 6: Schraubverbindung
- 7: Langloch
- 8: Gleitmutter

## Patentansprüche

1. Einrichtung zur vertikalen Einstellung eines Türblatts einer Schienenfahrzeugtür gegenüber einem Türantrieb (4), umfassend eine erste Zahnplatte (1), und eine zweite Zahnplatte (2), wobei die erste Zahnplatte (1) an dem Türblatt (3) lösbar befestigt ist und die zweite Zahnplatte (2) an dem Türantrieb (4) lösbar befestigt ist, und wobei die Zahnplatten (1, 2) jeweils an einer Oberfläche mit einer Zahnstruktur (5) für den gegenseitigen formschlüssigen Eingriff in Inkrementen des Zahnabstandes ausgestattet sind
**dadurch gekennzeichnet, dass**
zur lösbaren Befestigung der Zahnplatten (1, 2) mit dem Türantrieb (4) und dem Türblatt (3) jeweils eine Schraubverbindung vorgesehen ist und wobei die Zahnstruktur (5) in Einbaulage waagrecht ausgerichtet ist.

2. Einrichtung zur vertikalen Einstellung einer Schienenfahrzeugtür nach Anspruch 1, **dadurch gekennzeichnet, dass** die Zähne der Zahnstruktur (5) einen im Wesentlichen dreieckförmigen Querschnitt aufweisen.

3. Umbausatz für eine Tür eines Schienenfahrzeugs, umfassend eine erste Zahnplatte (1), und eine zweite Zahnplatte (2), wobei die erste Zahnplatte (1) zur lösbaren Befestigung an einem Türblatt (3) ausgebildet ist und die zweite Zahnplatte (2) zur lösbaren Befestigung an einem Türantrieb (4) ausgebildet ist und die Zahnplatten (1, 2) jeweils an einer Oberfläche mit einer Zahnstruktur (5) ausgestattet sind, welche ein Einrasten der Zahnplatten zueinander in Inkrementen des Zahnabstandes der Zahnstruktur ermöglichen, **dadurch gekennzeichnet, dass** zur lösbaren Befestigung der Zahnplatten (1, 2) mit dem Türantrieb (4) und dem Türblatt (3) jeweils eine Schraubverbindung vorgesehen ist und wobei die Zahnstruktur (5) in Einbaulage waagrecht ausgerichtet ist.

4. Umbausatz für eine Tür eines Schienenfahrzeugs nach Anspruch 3, **dadurch gekennzeichnet dass**, die Zähne der Zahnstruktur (5) einen im Wesentlichen dreieckförmigen Querschnitt aufweisen.

## Claims

1. Device for vertically adjusting a door leaf of a rail vehicle door with respect to a door drive (4), comprising a first toothed plate (1) and a second toothed plate (2), wherein the first toothed plate (1) is detachably fastened on the door leaf (3) and the second toothed plate (2) is detachably fastened on the door drive (4), and wherein the toothed plates (1, 2) are each equipped on a surface with a tooth structure (5) for mutual form-fit engagement into increments of the tooth pitch
**characterised in that**
for the detachable fastening of the toothed plates (1, 2) to the door drive (4) and the door leaf (3), a screw connection is provided in each case and wherein the tooth structure (5) is aligned horizontally in the installation position.

2. Device for vertically adjusting a rail vehicle door according to claim 1, **characterised in that** the teeth of the tooth structure (5) have a substantially triangular cross-section.

3. Conversion kit for a door of a rail vehicle, comprising a first toothed plate (1), and a second toothed plate (2), wherein the first toothed plate (1) is embodied for detachable fastening to a door leaf (3) and the second toothed plate (2) is embodied for detachable fastening to a door drive (4) and the toothed plates (1, 2) are each equipped with a tooth structure (5) on one surface, said tooth structure enabling an engagement of the toothed plates with respect to one another into increments of the tooth pitch of the tooth structure, **characterised in that** a screw connection is provided in each case for detachable fastening of the toothed plates (1, 2) with the door drive (4) and the door leaf (3) and wherein the tooth structure (5) is aligned horizontally in the installation position.

4. Conversion kit for a door of a rail vehicle according to claim 3,
**characterised in that** the teeth of the tooth structure (5) have a substantially triangular cross-section.

## Revendications

1. Dispositif de réglage vertical d'un vantail d'une porte de véhicule ferroviaire par rapport à un entraînement de porte (4), comprenant une première plaque-crémaillère (1) et une seconde plaque-crémaillère (2), dans lequel la première plaque-crémaillère (1) est fixée de façon détachable au vantail de porte (3) et la seconde plaque-crémaillère (2) est fixée de façon détachable à l'entraînement de porte (4), et dans lequel les plaques-crémaillères (1, 2) sont munies respectivement sur une surface d'une structure dentée (5) permettant un engrènement mutuel par complémentarité de forme dans des incréments entre les dents,
**caractérisé en ce qu'**un raccord boulonné est prévu pour fixer de façon détachable les plaques-crémaillères (1, 2) respectivement à l'entraînement de porte (4) et au vantail de porte (3) et dans lequel la structure dentée (5) est orientée horizontalement en position de montage.

2. Dispositif de réglage vertical d'une porte de véhicule ferroviaire selon la revendication 1, **caractérisé en ce que** les dents de la structure dentée (5) possèdent une section transversale essentiellement triangulaire.

3. Kit de transformation pour une porte d'un véhicule ferroviaire, comprenant une première plaque-crémaillère (1) et une seconde plaque-crémaillère (2), dans lequel la première plaque-crémaillère (1) est conçue pour être fixée de façon détachable à un vantail de porte (3) et la seconde plaque-crémaillère (2) est conçue pour être fixée de façon détachable à un entraînement de porte (4) et les plaques-crémaillères (1, 2) sont munies respectivement sur une surface d'une structure dentée (5) qui permettent un encliquetage des plaques-crémaillères l'une dans l'autre dans des incréments entre les dents de la structure dentée,
**caractérisé en ce qu'**un raccord boulonné est prévu pour fixer de façon détachable les plaques-crémaillères (1, 2) respectivement à l'entraînement de porte (4) et au vantail de porte (3) et dans lequel la structure dentée (5) est orientée horizontalement en position de montage.

4. Kit de transformation pour une porte d'un véhicule ferroviaire selon la revendication 3, **caractérisé en ce que** les dents de la structure dentée (5) possèdent une section transversale essentiellement triangulaire.
